# EUROPEAN PATENT APPLICATION

(11) **EP 1 949 784 A1**
(43) Date of publication of application: **30.07.2008**
(21) Application number: 06804941.0
(22) Date of filing: 16.10.2006
(51) Int. Cl.: A01G 9/02, C08L 97/02

(54) **NATURALLY DEGRADABLE GREEN FLOWER POT AND ITS MAKING PROCESS**

(30) Priority: 07.11.2005 CN 200510100879
(71) Applicant: Zhuhai greentech.,Ltd., Zhuhai Guangdong 519000 (CN)
(72) Inventor: CHEUNG, Sikling, Guangdong 519000 (CN); LIANG, Haibiao, Guangdong 519000 (CN)
(74) Representative: Richardt, Markus Albert
(86) International application number: PCT/CN2006/002720
(87) International publication number: WO 2007/051393

(57) **Abstract**

The present invention discloses a naturally degradable green flowerpot and its making process. The green flowerpot includes crushed plant fiber, adhesive agent and lubricant. The adhesive agent comprises oxidized starch and one or more selected from the group consisting of polyvinyl alcohol (PVA), polycaprolactone (PCL), and amino resin. The making process thereof includes the following steps: crushing plant fiber, mixing, adding lubricant and water, stirring, molding to form, polishing and drilling holes. The green flower pot can naturally degrade, has the advantages of low production cost and is suitable for planting various flowers especially in large mechanized plantation.

## Description

### Field of the Invention

The present invention relates to a green flowerpot which can degrade naturally and its producing method.

### Background of the Invention

With the continuous development of the society, and the continuous improvement of the people's living, flowers are enjoyed more and more by the people. Planting flowers and enjoying flowers have become parts of many people's lives.

The present flowerpots include plastic flowerpots and ceramic flowerpots. The plastic flowerpots are of light weight and can be made into various complex structure, which are suitable for large-scale mechanized plantation. However, the plastic flowerpots are difficult to degrade, which will cause environmental pollution. Furthermore, it is necessary to remove the plants from the flowerpots when transplanting, which might hurt the roots of the plants and influence the survival rate.

Therefore, people have developed naturally degradable flowerpots to solve these kinds of problems. For example, Chinese Patent 95111976.1 discloses a kind of flowerpot made of plant fiber and its production method. The straw board of plant fiber, its main raw material, is dealt with modifier and formed by net molding of vacuum adsorption. However, its composition further includes water repellent (water-resistant agent), filler, dispersant, precipitant, etc., in which filler can be selected from the group consisting of saponite, calcium carbonate, clay, etc. The composition of Chinese Patent 95111976.1 will affect the gas permeability and water permeability of flowerpots, thus affect plant growth. Furthermore, it uses paper pulp as raw material of its plant fiber, which has heavy pollution. The mechanical performance of the final product in Chinese Patent 95111976.1 is poor, which can not be formed into complex structure for large-scale mechanized plantation.

Chinese patent application 99113554.7 discloses a seedling pot made of plant fiber and its production method, in which its raw material comprises of plant fiber, adhesive agent and release agent. Plant fiber used in Chinese patent application 99113554.7 can be at least one selected from the group consisting of straw, husk, reeds, couch grass, bamboo and wood. The adhesive agent can be cereal starch. The release agent can be paraffin wax or rapeseed oil. Because flour is used as the adhesive agent, the final product of Chinese patent application 99113554.7 has poor mechanical strength and short working life.

Chinese patent application 01113233.7 discloses a naturally degradable flowerpot and its production method, in which urea-formaldehyde resin is used as adhesive agent. Urea-formaldehyde resin has poor degradation and is difficult to degrade entirely. Furthermore, the proportion of adhesive agent to plant fiber is 1:1-1.2. High adhesive agent will increase the production cost. At the same time, the final product may contain excessive free formaldehyde, which will affect plant growth.
Therefore, there is not any green flowerpot which can naturally degrade with a satisfactory result for practical use in the art up to now.

### Summary of the Invention

One object of the present invention is to provide a naturally degradable green flowerpot with good mechanical strength and longer working life. Another object of the present invention is to provide a production method for such a flowerpot.

To realize this purpose, the naturally degradable green flowerpot of the present invention can be made of plant fiber, adhesive agent and other materials, in which the adhesive agent is oxidized starch together with one or more selected from the group consisting of polyvinyl alcohol (PVA), polycaprolactone (PCL) and amino-resin, such as amino-plastics molding powder.

In the present invention, the adhesive agent is made of both natural adhesive agent and synthetic adhesive agent. In this way the advantages of natural adhesive agent and the advantage of synthetic adhesive agent can be combined to produce a naturally degradable green flowerpot for practical use. Flowerpot with this kind of adhesive agent can not only naturally degrade into non-toxic, harmless substances in the same way as that with natural adhesive agent, such as flour, but also maintain mechanical strength in longer working life in the same as that with a synthetic adhesive, such as urea-formaldehyde resin.

The naturally degradable green flowerpot of the present invention is suitable for planting various types of flowers. It can gradually degrade with plant growing. It can be planted into the earth together with flowers when transplanting flowers with rapid degradation and without pollution to natural environment.

When preparing the naturally degradable green flowerpot of the present invention, plant fiber can be shattered into particles in the size of 20 mesh to 180 mesh, preferably in the size of 40 mesh to 160 mesh, more preferably in the size of 60 mesh to 100 mesh. In fact, the size of plant fiber particle has a very important effect on the permeability, mechanical strength, working life, etc. of the flowerpot.

Preferably, the naturally degradable green flowerpot of the present invention comprises 60-80 percent (dry weight) of plant fiber. The rest components are adhesive agent, lubricant for production, etc. Because the content of plant fiber in the flowerpot of the present invention exceeds at least half of its total dry weight, the flowerpot has low production cost and can degrade readily. More preferably, in the naturally degradable green flowerpot of the present invention the dry weight ratio of plant fiber to adhesive agent is between 2:1 and 5:1, most preferably between 2.5:1 and 3.5:1.

The adhesive agent of the present invention comprises oxidized starch, especially those with carboxyl content more than 1%, and one or more selected from the group consisting of polyvinyl alcohol (PVA), especially those with alcoholysis more than 97%, polycaprolactone (PCL), especially those with molecular weight between 50000 and 120000, and amino-resin. The amino-resin can be urea-formaldehyde resin, melamine resin or their mixture with environmental grade EO- E3.

Although oxidized starch is a cheap adhesive agent with good flowability, it is lack of bonding strength and water resistance. Therefore in the present invention other degradable polymer material is added to modify the performance of oxidized starch to improve its bonding strength and water resistance. The adhesive agent of the present invention comprises 20-80% oxidized starch (in dry weight) and the rest can be one or more selected from the group consisting of polyvinyl alcohol (PVA), polycaprolactone (PCL), and amino-resin. The performance of adhesive agent made from more kinds of polymer and oxidized starch is better than that made from a single polymer and oxidized starch. The content of oxidized starch can be used to adjust the working life of the flowerpot in the present invention according to plant growth cycle. Generally the content of oxidized starch is about 60% for a flowerpot with a 3-month planting time. The higher the content of oxidized starch is, the shorter the planting time of a flowerpot is.

As a specific embodiment, the adhesive agent of the present invention can be mixture of oxidized starch, polyvinyl alcohol, PCL and amino-plastics molding powder. With such a formulation the adhesive agent has good adhesive effect and is good to plant growth after the degradation due to complex components.

Plant fiber can be selected from the group consisting of rice husk powder, bamboo powder, wood powder, coconut shell powder, and the shell or stalk of other crops which can be shattered to 20-180 mesh, preferably 60-100 mesh. Preferably, rice husk powder can be used for its low price and its wide source.

On the other hand, the present invention also provides a method for producing a naturally degradable green flowerpot, which comprises the following steps:
(1) crushing and sieving plant fiber,
(2) mixing the crushed plant fiber with adhesive agent to obtain a mixed material,
(3) heating a mold to 120-180 , preferably to 130-160 , and
(4) mixing evenly the mixed material from step (2) with lubricant and appropriate amount of water, and then adding the resulted composition to the heated mold to form a product with a pressing pressure of 15-100 MPa, preferably 40-80 MPa.
   The manufacturing method of the present invention can further comprises:
(5) burnishing the product after molding when it is still warm to wipe off burr and punching one or more drainage holes at its bottom.

In the manufacturing method above, the adhesive agent in step (2) can be crushed before being mixed with the crushed plant fiber. That is, plant fiber and adhesive agent are crushed separately to 60-100 mesh, and then mixed well.

In the manufacturing method above, the adhesive agent in step (2) can be dissolved in water before being mixed, and then mixed well with the crushed plant fiber and dried. Such a mixing method can make multi-component adhesive agent mixed well, and let the adhesive agent mix with plant fiber better. For example, particles of plant fiber after sieving are mixed well with 20-30 percent aqueous solution of adhesive agent in a mixer, then the mixture is removed to a rotary dryer for dehydration until the content of water is 5% -10%.

In step (4) of the manufacturing method above, the ratio of the mixture: lubricant (such as zinc stearate or calcium stearate): water can be 100:1:5-10.

In step (4) of the manufacturing method above, the time for pressing can be 0.4-1.5 minutes, and during the process of pressing an exhaustion can be conducted for 1 to 3 times.

In step (4), adding lubricant is helpful to increase the flowability of molding material, which includes a mixture of plant fiber and adhesive agent, lubricant and water, and make releasing from the mold easier. Thus in the present invention natural plant fiber is used as main raw material, with modified adhesive agent based on oxidized starch and other degradable polymer(s). A flowerpot can be formed by a once-through hot pressing. The flowerpot prepared has a good mechanical performance, which is similar to plastic, and can be produced in different complicated structures for large-scale mechanized plantation.

In step (1) plant fiber should be crushed to particles with a size of 20-180 mesh, preferably 60-100 mesh. If the particles of plant fiber are too rough, the flowability of the material will be reduced, and it is not suitable for producing a flowerpot with complex structure. If they are too fine, the processing difficulty will be increased and so will the production cost.

If the adhesive agent is crushed and then mixed with plant fiber, the size ratio of the sieved particles of plant fiber and the particles of adhesive agent can be controlled in 1:0.5 to 2. If the difference between the particle sizes is too big, it will lead to worse mixing, which will in turn affect the surface quality and bonding strength of the final product as well as bad molding for some products with complex structure.

The naturally degradable green flowerpot of the present invention has the advantages such as low cost and natural degradation. Its working life and mechanical strength can be adjusted in accordance with requirements. The naturally degradable green flowerpot is an ideal alternative for a flowerpot in the art, especially for a disposable plastic flowerpot. It is suitable for planting various types of flowers, particularly for large-scale mechanized plantation.

In the following the present invention will be described in detail with specific embodiments. These specific embodiments are not intended to limit the present invention. Rather on the basis of the present invention the skilled one in the art can make further improvements or changes without any creative work. But these improvements or changes are still within the protection scope of the present invention.

### Embodiments

### Example 1

The naturally degradable green flowerpot in this example is prepared by the following method, comprising:
1) crushing plant fiber and sieving it with a sieve of 60-100 mesh to obtain a sieved material,
2) fully mixing 60 grams of the above sieved material and 200 grams of adhesive agent solution which contains 20% solid content in a mixer, and then removing to a drying roller for dehydrating until the content of water is 5% -10% to obtain a mixed material,
3) adding 1 gram of zinc stearate as lubricant and 5-10 grams of water into the above mixed material, and then stirred fully to obtain a molding material,
4) putting the above molding material into a mold heated to 130-160 to press it with a pressure of 50-100 MPa for 0.4-1.5 minutes, and conducting an exhaustion during pressing for 1 to 3 times to obtain a shaped product, and
5) polishing or burnishing the above shaped products to wipe off burr and drilling drainage hole(s) at its bottom,
in which the adhesive agent solution in step 2) is prepared by adding 10 grams of polyvinyl alcohol (PVA), 10 grams of polycaprolactone (PCL), 10 grams of amino-resin, and 10 grams of oxidized starch into water in 90-95 sequentially with fully stirring.

### Example 2

The naturally degradable green flowerpot in this example is prepared by the following method, comprising:
1) crushing plant fiber and sieving it with a sieve of 60-100 mesh to obtain a sieved material,
2) mixing fully 80 grams of the above sieved material and 100 grams of adhesive agent solution which contains 20% solid content in a mixer, and then removing to a drying roller for dehydrating until the content of water is 5% -10% to obtain a mixed material,
3) adding 1 gram of zinc stearate as lubricant and 5-10 grams of water into the above mixed material, and then stirred fully to obtain a molding material,
4) putting the above molding material into a mold heated to 130-160 to press it with a pressure of 50-100 MPa for 0.4-1.5 minutes, and conducting an exhaustion during pressing for 1 to 3 times to obtain a shaped product, and
5) polishing or burnishing the above shaped products to wipe off burr and drilling drainage hole(s) at its bottom,
in which the adhesive agent solution in step 2) is prepared by adding 5 grams of polycaprolactone (PCL), 5 grams of amino-resin, and 10 grams of oxidized starch into water in 90-95 sequentially with fully stirring.

### Example 3

The naturally degradable green flowerpot in this example is prepared by the following method, comprising:
1) crushing plant fiber and sieving it with a sieve of 60-100 mesh to obtain a sieved material,
2) mixing fully 70 grams of the above sieved material and 150 grams of adhesive agent solution which contains 20% solid content in a mixer, and then removing to a drying roller for dehydrating until the content of water is 5% -10% to obtain a mixed material,
3) adding 1 gram of zinc stearate as lubricant and 5-10 grams of water into the above mixed material, and then stirred fully to obtain a molding material,
4) putting the above molding material into a mold heated to 130-160 to press it with a pressure of 50-100 MPa for 0.4-1.5 minutes, and conducting an exhaustion during pressing for 1 to 3 times to obtain a shaped product, and
5) polishing or burnishing the above shaped products to wipe off burr and drilling drainage hole(s) at its bottom,
in which the adhesive agent solution in step 2) is prepared by adding 5 grams of polyvinyl alcohol (PVA), 5 grams of amino-resin, and 20 grams of oxidized starch into water in 90-95 sequentially with fully stirring.

### Example 4

The naturally degradable green flowerpot in this example is prepared by the following method, comprising:
1) crushing plant fiber and sieving it with a sieve of 60-100 mesh to obtain a sieved material,
2) mixing fully 60 grams of the above sieved material and 160 grams of adhesive agent solution which contains 25% solid content in a mixer, and then removing to a drying roller for dehydrating until the content of water is 5% -10% to obtain a mixed material,
3) adding 1 gram of zinc stearate as lubricant and 5-10 grams of water into the above mixed material, and then stirred fully to obtain a molding material,
4) putting the above molding material into a mold heated to 130-160 to press it with a pressure of 50-100 MPa for 0.4-1.5 minutes, and conducting an exhaustion during pressing for 1 to 3 times to obtain a shaped product, and
5) polishing or burnishing the above shaped products to wipe off burr and drilling drainage hole(s) at its bottom,
in which the adhesive agent solution in step 2) is prepared by adding 5 grams of polyvinyl alcohol (PVA), 5 grams of polycaprolactone (PCL), 5 grams of amino-resin, and 25 grams of oxidized starch into water in 90-95 sequentially with fully stirring.

### Example 5

This example is to prepare a naturally degradable green flowerpot for a 2-month planting period with the following method, comprising the steps of:
adding 3 grams of polyvinyl alcohol (PVA), 2 grams of polycaprolactone (PCL), 2 grams of amino resin, and 18 grams of oxidized starch into 125 grams of water in 90-95 sequentially with fully stirring to obtain adhesive agent solution,
adding 75 grams of rice husk powder in 80 mesh into the above adhesive agent solution, and stirring them fully in a mixer, and then removing into a drying roller for dehydrating until the content of water is 5% -10% to obtain a mixed material,
adding 1 grams of zinc stearate and 6 grams of water in the above mixed material with fully stirring to obtain a molding material, and
putting the above molding material into a mold heated to 130-160 to press it with a pressure of 70 MPa for 1 minute, and conducting an exhaustion for 2 times during pressing to obtain a shaped product.

### Example 6

This example is to prepare a naturally degradable green flowerpot for a 6-month planting period with the following method, comprising the steps of:
adding 7 grams of polyvinyl alcohol (PVA), 8 grams of amino resin, and 10 grams of oxidized starch into 125 grams of water in 90-95 sequentially with fully stirring to obtain adhesive agent solution,
adding 75 grams of bamboo powder in 100 mesh into the above adhesive agent solution, and stirring them fully in a mixer, and then removing into a drying roller for dehydrating until the content of water is 5% -10% to obtain a mixed material,
adding 1 grams of zinc stearate and 6 grams of water in the above mixed material with fully stirring to obtain a molding material, and
putting the above molding material into a mold heated to 130-160 to press it with a pressure of 70 MPa for 1 minute, and conducting an exhaustion for 2 times during pressing to obtain a shaped product.

### Example 7

The naturally degradable green flowerpot in this example is prepared by the following method, comprising:
1) crushing plant fiber adhesive agent, and sieving them with a sieve of 60-100 mesh to obtain a sieved material and a sieved adhesive agent respectively,
2) mixing fully 60 grams of the above sieved material and 40 grams of the above sieved adhesive agent in a mixer to obtain a mixed material,
3) adding 1 gram of zinc stearate as lubricant and 5-10 grams of water into the above mixed material, and then stirred fully to obtain a molding material,
4) putting the above molding material into a mold heated to 130-160 to press it with a pressure of 15-30 MPa for 0.4-1.5 minutes, and conducting an exhaustion during pressing for 1 to 3 times to obtain a shaped product, and
5) polishing or burnishing the above shaped products when warm to wipe off burr and drilling drainage hole(s) at its bottom,
in which the adhesive agent in step 2) comprises 10 grams of polyvinyl alcohol (PVA), 10 grams of polycaprolactone (PCL), 10 grams of amino-resin, and 10 grams of oxidized starch.

## Claims

1. A flowerpot which can degrade naturally, comprising crushed plant fiber, adhesive agent and lubricant, wherein said adhesive agent comprises oxidized starch and at least one selected from the group consisting of polyvinyl alcohol, polycaprolactone and amino-resin.

2. The flowerpot according to Claim 1, wherein the size of the particles of said crushed plant fiber is 20 to 180 mesh, preferably 40 to 160 mesh, and more preferably 60 to 100 mesh.

3. The flowerpot according to Claim 1, wherein said flowerpot includes 60-80% (dry weight) of said plant fiber.

4. The flowerpot according to Claims 1, wherein the dry weight ratio of said plant fiber to said adhesive agent is between 2:1 and 4:1, preferably between 2.5:1 and 3.5:1.

5. The flowerpot according to one of Claims 1-4, wherein the content of said oxidized starch in said adhesive agent is 20-80% (dry weight).

6. The flowerpot according to Claims 5, wherein said adhesive agent is a mixture of oxidized starch, polyvinyl alcohol, polycaprolactone and amino-resin.

7. A process for producing a flowerpot which can degrade naturally, comprising
(1) crushing and sieving plant fiber,
(2) mixing the crushed plant fiber with adhesive agent to obtain a mixed material,
(3) heating a mold to 120-180 , preferably to 130-160 , and
(4) mixing said mixed material from step (2) with lubricant and appropriate amount of water evenly, and then adding the resulteded mixture to the heated mold to form a product with a pressure of 15-100 MPa, preferably with a pressure of 40-80 MPa.

8. The process according to Claim 7, further comprising
(5) burnishing the product after molding when it is still warm to wipe off burr and punching one or more drainage holes at its bottom.

9. The process according to Claim 7 or Claim 8, wherein said adhesive agent in step (2) is crushed before mixing with the crushed plant fiber.

10. The process according to Claim 7 or Claim 8, wherein said adhesive agent in step (2) is dissolved into water before mixing with the crushed plant fiber, and then the mixed material is dried after mixing.
